# EUROPEAN PATENT SPECIFICATION

(11) **EP 3 419 282 B1**
(45) Date of publication and mention of the grant of the patent: **04.01.2023**
(21) Application number: 17178544.7
(22) Date of filing: 28.06.2017
(51) Int. Cl.: H04N 7/14

(54) **METHOD AND SYSTEM FOR AUTOMATIC CREATION OF A SYNOPTIC IN A CONFERENCING NETWORK**
VERFAHREN UND SYSTEM ZUR AUTOMATISCHEN ERZEUGUNG EINER SYNOPSE IN EINEM KONFERENZNETZWERK
PROCÉDÉ ET SYSTÈME PERMETTANT D'OPTIMISER L'UTILISATION DE RESSOURCES RÉSEAU DANS UN RÉSEAU DE COMMUNICATION

(30) Priority: 21.06.2017 EP 17177268
(43) Date of publication of application: 26.12.2018
(73) Proprietor: Televic Conference NV, 8870 Izegem (BE)
(72) Inventor: ROSEZ, Didier, 8890 Dadizele (BE); VAN MULYDER, Jurgen, 1600 Sint-Pieters-Leeuw (BE); VANGHELUWE, Bert, 8800 Rumbeke (BE); COTTIGNIE, Matthijs, 8510 Marke (BE); VANHEULE, Karel, 8500 Kortrijk (BE); DEMUYTERE, Pieter, 9870 Zulte (BE); NAESSENS, Frederik, 8800 Roeselare (BE)
(74) Representative: IPLodge bv

(56) References cited:
- EP-A1- 1 786 145
- EP-A2- 1 617 601
- US-A1- 2008 159 178
- US-A1- 2012 081 504
- US-B1- 9 554 091
- YANYING GU ET AL: "A survey of indoor positioning systems for wireless personal networks", IEEE COMMUNICATIONS SURVEYS AND TUTORIALS, INSTITUTE OF ELECTRICAL AND ELECTRONICS ENGINEERS, US, vol. 11, no. 1, 1 January 2009 (2009-01-01), pages 13-32, XP011252843, ISSN: 1553-877X

## Description

### Field of the Invention

The present invention pertains to the field of conferencing networks, more in particular to the creation of a synoptic in a conferencing system.

### Background

In conferencing systems, conference terminals (or "delegate units") allow individual delegates to transmit and receive audio and optionally video, in particular delegates' speech and/or translations thereof, and data to and from each other, optionally via one or more centralized servers or access points.

In order to function in an orderly manner, setting up the conferencing system typically involves creating a map of the conference room (or "synoptic"), wherein each single delegate unit is linked to a particular seat in the conference room assigned to a particular delegate.

Setting up a synoptic is a time-consuming, and a mainly manual labor-intensive process, prone to error. Typically, one needs to walk around the room to physically "activate" sequentially every single delegate unit, e.g. by pushing a button on the delegate unit, and allow a connection of said delegate unit to the conferencing system. Then, the user of the synoptic has to manually link every single delegate unit to a particular seat in the conferencing room. Hence, there is a need for a method or a system that facilitates or automatizes the creation of a synoptic.

A method for creating a synoptic is described in unpublished European patent application no. 15202194.5, filed on 22 December 2015, in the name of the present applicant. Said synoptic is limited to a wireless conferencing system.

The document "DCN-SWSMV Synoptic Microphone and Voting Software", published electronically by Bosch Security Systems at http://resource.boschsecurity.com/documents/ Data_sheet_enUS_1829624459.pdf, discloses software for a conferencing system, including automatic seat assignment as well as synoptic microphone monitoring and control. The software contains a user interface, based on a graphical representation of the conference venue. Every device is individually added and automatically recognized by the system, which creates an icon for the device on the interface venue representation. The position is then placed on the right position on the map using standard "drag and drop".

It is an object of embodiments of the present invention to facilitate the creation of a synoptic in a conferencing system. It is another object of embodiments of the present invention to facilitate tracking of movable conference terminals.

### Summary of the invention

According to an aspect of the present invention, there is provided a method as defined in claim 1.

It is an advantage of the present invention that it generates a spatial topology of the conference terminals, i.e. a map showing where each conference terminal is physically located, with a minimum of signal exchanges and without human intervention. The topology information obtained in this manner may be used to facilitate equipment tracking and configuration, increase security, improve the user interface of the chairperson's or the administrator's unit, and generally conduct meetings more efficiently. It is a further advantage of the present invention that it generates this spatial topology, without the need for extensive manual labor. Rather, the method and system described herein allow for automatic mapping of the conference room, wherein each single delegate unit is linked to a particular seat in the conference room.

It is an advantage of this invention that a user, typically a chairperson or a system administrator, can refer to a visual representation of the conference floor, showing the terminals in their true (relative) physical positions, and select individual terminals on which management tasks must be performed (e.g., muting a microphone, starting a recording function, sending a signal, etc.) on the basis of this visual representation. In this way, the selection of the appropriate terminal is rendered more intuitive, and mistakes can be reduced.

In an embodiment, emitting a locatable signal and obtaining location values are performed periodically for every single conference terminal of said plurality, and said displayed graphical representation is updated when said values have changed.

It is an advantage of this embodiment that the graphical representation of the topology remains up to date, even as terminals are being moved around during the conference.

In an embodiment, the method according to the present invention further comprises that said locatable signal is an optical signal and that said terminal-locating device comprises at least one camera for registering said optical signal.

In an embodiment, the method according to the present invention further comprises that said optical signal is an infrared signal.

It is an advantage of this embodiment that, since infrared light is invisible to the human eye, position changes of the conference terminals can be detected during an on-going conference. It is a further advantage of this embodiment that additional terminals can be added to the synoptic, even during an active meeting.

In an embodiment, the method according to the present invention further comprises that said location values for assigning said conference terminal a position in said spatial topology, are derived from the at least one camera's stance, in particular the camera's tilt and angle.

It is an advantage of this embodiment that the camera can adopt a specific position and therefrom derive at least the relative position of the signal-emitting conference terminal in the conference room. It is a further advantage of this embodiment that information regarding the camera's stance for detection of a particular conference terminal can be used to directly steer said camera and/or other cameras in use of the conference system with the aim of obtaining a proper image registration of the delegate using said terminal.

In an embodiment, the method according to the present invention further comprises that said locatable signal is an audio signal and wherein said terminal-locating device comprises at least one audio receiver for registering said audio signal.

In an embodiment, the method according to the present invention further comprises that said audio signal is an ultrasound signal.

It is an advantage of the present invention that, since ultrasound is inaudible for humans, position changes of the conference terminals can be detected during an on-going conference. It is a further advantage of this embodiment that additional terminals can be added to the synoptic, even during an active meeting.

In an embodiment, the method according to the present invention further comprises that said location values for assigning said conference terminal a position in said spatial topology, are derived from the registered audio signal, in particular the volume of the audio signal.

It is an advantage of this embodiment that registration of features of the emitted signal allows for obtaining at least the relative position of the conference terminal.

In an embodiment of the method according to the present invention, the terminal-locating device is part of the plurality of conference terminals.

It is an advantage of this embodiment that one or more of the conference terminals can perform the tasks of the terminal-locating device, for example by using its or their microphone(s).

According to an aspect of the present invention, there is provided a computer program product as defined in claim 10.

According to an aspect of the present invention, there is provided a system as defined in claim 11.

The technical effects and advantages of the embodiments of the computer program product and the system according to the present invention correspond *mutatis mutandis* to those of the corresponding embodiments of the method according to the present invention.

### Brief Description of the Figures

These and other technical effects and advantages of embodiments of the present invention will now be further described with reference to the accompanying drawings, in which:
- Figure 1 provides a flow chart of a method according to an embodiment of the present invention; and
- Figure 2 provides a diagram of a system according to embodiments of the present invention.

### Description of Embodiments

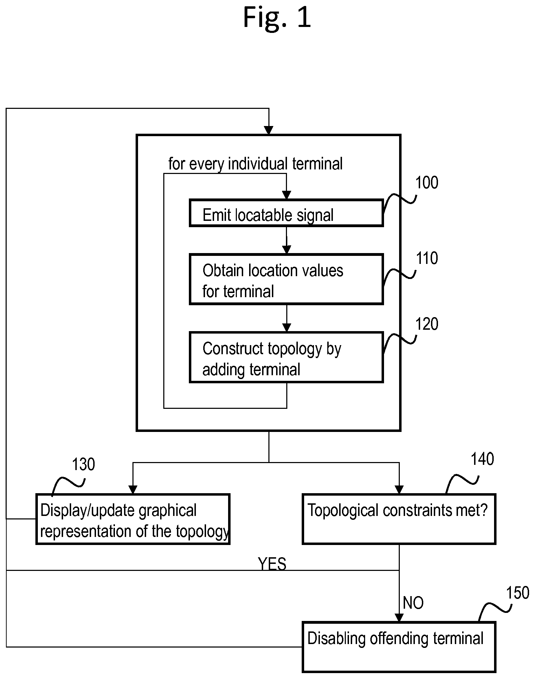

Figure 1 presents a flow chart of an embodiment of the method according to the present invention. The method may be carried out by a centralized computer, a chairperson's unit, an administrator's unit, a designated conference terminal, or the like; hereinafter, the entity performing the method will be referred to as the processing system, without loss of generality.

It is a goal of the invention to determine a spatial topology of a network comprising a plurality of conference terminals. The method according to the invention comprises a sequence of steps, which are performed for every conference terminal that is part of the plurality of conference terminals. The order for adding individual conference terminals is controlled by the processing system. However, the resulting synoptic is independent of the order that is chosen by the processing system. Although for adding a terminal to the synoptic, it has to emit a locatable signal, it will be clear that more than one conference terminal can emit locatable signals at the same time.

In a first step, a locatable signal is emitted by the conference terminal 100.

According to certain embodiments of the present invention, said locatable signal is an optical signal. Emitting an optical signal comprises activating a source of optical energy, e.g. turning on a light source. The light source may emit its light in a substantially omnidirectional way (e.g., if the light source is arranged on the top side of the conference terminal), or it may emit its light in a more limited spatial angle. In the latter case, the conference terminal must be positioned in such a way as to ensure that the terminal-locating device described below is within the angle covered by the light source. The light source may be configured to emit a narrow beam (e.g., a light spot, or a planar beam), in which case it is preferably arranged to change direction in a sweeping motion, the way a lighthouse emits its signal.

Preferably, said optical signal is an infrared signal. Advantageously, the use of an infrared signal permits to add extra terminals to the synoptic and to continue obtaining location values for all terminals making up the synoptic, even during an on-going conference. Indeed, due to the invisibility of the infrared signal for the human eye, the whereabouts or change in position of terminals that are already known to the synoptic can be followed throughout the room, and additional terminals can be added to the synoptic, even during an active meeting.

The optical signal may consist of simply switching the light source to an "on" state for the duration of the detection interval, or it may comprise emitting a more complex pattern of "on" and "off" stages, an intensity-modulated signal, or even an amplitude-modulated, for example to produce a signal that is unique to a particular conference terminal or a particular subset of conference terminals and/or to encode additional information in the signal (e.g. a conference terminal identifier).

According to alternative embodiments of the invention, said locatable signal is an audio signal. Preferably, said audio signal is an ultrasound signal, which is for the purpose of the invention defined as an audio signal having a frequency that is inaudible for human ears. This may be a signal having a frequency in the range above 16 kHz, preferably above 20 kHz. Similar to described advantages here above, the use of an inaudible audio signal permits to follow moving conference terminals through the conference room, and to add new terminals to the synoptic without disturbing an on-going conference.

The audio signal may include a modulated (e.g. frequency-modulated or amplitude-modulated) carrier wave, for example to produce a signal that is unique to a particular conference terminal or a particular subset of conference terminals and/or to encode additional information in the signal (e.g. a conference terminal identifier). To avoid emitting unnecessarily loud signals, the intensity of the audio signal may be gradually increased until successful detection has occurred.

According to alternative embodiments of the invention, said locatable signal is a radio-frequency signal (RF signal). Similar to the described advantages here above, the use of RF signals permits to observe the position of a moving terminal keeping the synoptic up to date. A new terminal can be added to the synoptics without disturbing an on-going conference.

The RF signal may include a modulated (e.g. frequency-modulated or amplitude-modulated) carrier wave, for example to produce a signal that is unique to a particular conference terminal or a particular subset of conference terminals and/or to encode additional information in the signal (e.g. a conference terminal identifier).

In a second step, which may start once the locatable signal is emitted by the conference terminal **100,** location values are obtained for the signal-emitting conference terminal **110.** For the purpose of the invention, the term "location values" of a terminal refers to values that are indicative of the location of said terminal. The location values may include an angular position and a distance relative to a predetermined point. The availability of location values for all the target conference terminals allows the construction of a topology of the conference system. Depending on the purpose of the topology, angular positions may suffice if all the conference terminals can be sufficiently distinguished by their angular position relative to the reference point; this is the case of a conference where all the delegates are sitting in a single row (this "row" does not need to be straight, it may be a round-table configuration or a U-shaped row), if the reference point coincides with the chairperson's seat or the camera recording the speakers - clearly, in such cases the chairperson or the camera only needs to know in which direction to look to find a particular delegate, assigned to a particular conference terminal, and the distance is not material. However, in the more general case, both angular information and distance information (or x and y coordinates) are desired to adequately locate the target conference terminals. Alternatively, as explained here below, the location values may include two angular positions.

Said location values are obtained by use of a terminal-locating device. For the purpose of the invention, the term "terminal-locating device" refers to a device that is used to detect a conference terminal and to deduce location values from the observations made by the device.

When the locatable signal is an optical signal, the terminal-locating device is provided with at least one camera for registering said optical signal. The camera or cameras may have a sufficiently wide field of view to be able to see all the target conference terminals, or they may be mounted in such a way that they can tilt and pan sufficiently to see all the target conference terminals. More in particular, the camera is adapted for searching the conference room in order to detect the signal-emitting conference terminal. If the camera is capable of measuring the distance to the source of the target optical signal, for example by operating an autofocus mechanism and reading out the distance at which the optics have to be focused in order to get an optimal view of the source of the target optical signal, location values indicating at least a relative position of the terminal with regard to the at least one camera can be derived from the measured distance as well as the position of the source of the target optical signal within the camera's field of view and, in the case of a movable camera, the position or stance the camera has to take for detecting the signal-emitting terminal. More in particular, said values can be derived from the camera's tilt or angle.

Preferably, the terminal-locating device is provided with at least two cameras, resulting in the measurement of at least two angular positions. Said at least two cameras typically have predetermined positions. Advantageously, the combination of angles of the terminal with regard to said at least two cameras allows deriving the absolute position of the terminal in the conference room, by triangulation (i.e., use of the rules of trigonometry). In such an arrangement, direct distance measurement by the individual cameras is not necessary, but it may still be used to improve accuracy.

When the locatable signal is an audio signal, the terminal-locating device is provided with at least one audio receiver for registering the emitted audio signal.

Location values indicating at least a relative position of the terminal with regard to the at least one audio receiver can be derived from features of the registered audio signal, such as the volume and/or the direction of the signal.

According to embodiments of the invention, the at least one audio receiver comprises a directional microphone. A single directional microphone may detect the angle of incidence of a detected audio signal if it can be made to make an angular sweep (e.g., mechanically or by varying certain physical characteristics of the directional microphone) and locate the angle where the intensity of the received signal peaks.

Every individual conference terminal typically comprises an audio receiver. According to preferred embodiments, said audio receiver of said terminal-locating device is an audio receiver of a particular conference terminal.

Preferably, the terminal-locating device is provided with at least two audio receivers. Advantageously, the analysis of the phase and intensity differences of the signals received at the two audio receivers allows deriving the absolute position of the terminal in the conference room, by use of the rules of trigonometry. Preferably, said at least two audio receivers of said terminal-locating device are audio receivers from different conference terminals.

According to embodiments of the invention, the at least one audio receiver may be a microphone array, which is capable of detecting the direction of incidence of the detected sound signals.

When the locatable signal is a RF signal, the terminal-locating device is provided with at least one RF signal receiver for registering the emitted RF signal.

Location values indicating at least a relative position of the terminal with regard to the at least one RF signal receiver can be derived from features of the registered RF signal, such as the strength and/or the direction of the signal.

Preferably, the terminal-locating device is provided with at least two RF signal receivers, allowing to derive the absolute position of the terminal in the conference room, by applying triangulation, taking into account the phase and/or intensity difference of the signals received at the respective RF signal receivers.

In a third step, the spatial topology is constructed by adding said emitting conference terminal at a position derived from said location values **120.**

According to certain embodiments, location values can be combined to determine relative positions of the plurality of conference terminals, the relative positions forming the spatial topology. The combination of distances and angles into a topological map is done on the basis of the basic rules of trigonometry, which are known to the person skilled in the art. Advantageously, the calculation may take into account the assumption that all conference terminals are substantially located in a common horizontal plane, such that the problem of reconstructing the topological map is substantially a two-dimensional problem.

A graphical representation of the spatial topology may be displayed **130** as a map in a graphical user interface. This graphical user interface may be part of a chairman's unit or an administrator's unit. Preferably, the map is shown in overlay on a photograph or video image of the conference room (after an appropriate perspective transformation), to make it intuitively clear to the user which delegate is associated with which terminal. This greatly facilitates the remote operation of the terminals by the chairperson or administrator.

As indicated by the arrows returning to the block of steps **100-110-120** in the illustrated flow chart, the actions of emitting a locatable signal, obtaining location values and assigning the terminal a position in the synoptic are preferably performed periodically, and the optional displayed graphical representation **130** is updated when the relative positions have changed.

Preferably, at least one conference terminal from among the plurality of conference terminals comprises means to determine an absolute orientation, such as an integrated compass, and information pertaining to the absolute orientation is used to determine absolute positions of the plurality of conference terminals. A single measurement of absolute direction can indeed suffice to remove the remaining degree of freedom that would otherwise remain in the topological information.

For security reasons, the method may further comprise verifying **140** whether each conference terminal meets a predetermined topological constraint, such as being within a certain distance from the chairperson's unit, being within a predefined perimeter, and the like. An alarm signal may be generated (not shown in the flow chart) if the verifying reveals that at least one conference terminal does not meet the topological constraint. The offending terminal may subsequently be disabled **150.**

The present invention also relates to a computer program product comprising code means configured to cause a processor to carry out the steps of the method described above. The computer program product may consist of the code means as provided on a computer-readable medium, including but not limited to magnetic, optical, or solid-state storage media.

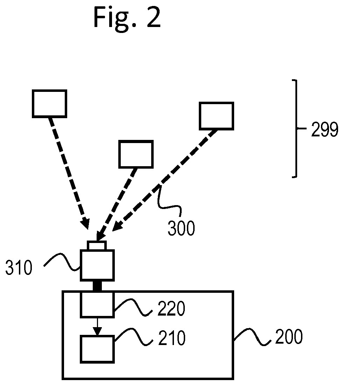

The present invention also relates to a system for determining a spatial topology of a network comprising a plurality of conference terminals, an exemplary embodiment of which is illustrated in Figure 2. Such a system **200** may be integrated with a centralized computer, a chairperson's unit, an administrator's unit, a designated conference terminal, or the like, or it may be implemented as a stand-alone unit. The system comprises an interface **210** for exchanging signals with the plurality of conference terminals **299** and a processor **220** operatively connected to the interface, the processor being configured to carry out the steps of the method described above using values obtained through the interface. The system may comprise or be connectable to a terminal locating device as described above. All the optional features and details described above with reference to the method according to the invention, apply with the same effect to embodiments of the system according to the invention. The processor **220** may be implemented in dedicated hardware (e.g., ASIC), configurable hardware (e.g., FPGA), programmable components (e.g., a DSP or general purpose processor with appropriate software), or any combination thereof. The same component(s) may also include other functions. Without loss of generality, Figure 2 shows an embodiment where the locatable signal is an optical signal **300** and the terminal-locating device is a camera **310.**

While the invention has been described hereinabove with respect to some specific examples, this was done to illustrate and not to limit the invention, the scope of which is defined by the attached claims. The skilled person will understand that any features and advantages described in connection with the method of the present invention may also be applied to the system of the present invention, and vice versa.

## Claims

1. A method for determining a spatial topology of a network comprising a plurality of conference terminals in a conference room and for the automatic creation of a synoptic in a conferencing system, wherein a synoptic is a map of the conference room wherein each single conference terminal is linked to a particular seat in the conference room,
the method comprising:
for each single conference terminal of said plurality:
- emitting a locatable signal;
- obtaining location values for said emitting conference terminal by means of a terminal-locating device;
- constructing said topology by adding said emitting conference terminal at a position derived from said location values
wherein the method further comprises displaying a graphical representation of said spatial topology as a map in a graphical user interface, wherein said graphical user interface is part of an administrator's unit or a chairman's unit,
wherein a user, being a system administrator or a chairperson, refers to said representation and selects individual terminals on which management tasks must be performed on the basis of this visual representation.

2. The method according to claim 1, wherein the steps of emitting a locatable signal and obtaining location values are performed periodically for every single conference terminal of said plurality, and wherein said displayed graphical representation is updated when said values have changed.

3. The method according to claim 1 or claim 2, wherein said locatable signal is an optical signal and wherein said terminal-locating device comprises at least one camera for registering said optical signal.

4. The method according to claim 3, wherein said optical signal is an infrared signal.

5. The method according to claim 3 or 4, wherein said location values for assigning said conference terminal a position in said spatial topology, are derived from the at least one camera's stance, in particular the camera's tilt and angle.

6. The method according to claim 1 or claim 2, wherein said locatable signal is an audio signal and wherein said terminal-locating device comprises at least one audio receiver for registering said audio signal.

7. The method according to claim 6, wherein said audio signal is an ultrasound signal.

8. The method according to claim6 or 7, wherein said location values for assigning said conference terminal a position in said spatial topology, are derived from the registered audio signal, in particular the volume of the audio signal.

9. The method according to any of claims 1-8, wherein said terminal-locating device is part of said plurality of conference terminals.

10. A computer program product comprising code means configured to cause a processor to carry out the constructing step of the method according to any of claims 1-9 and to interface with an administrator's unit or a chairperson's unit having a graphical user interface allowing a user to select individual terminals on which management tasks must be performed.

11. A system for determining a spatial topology of a network comprising a plurality of conference terminals, the system comprising an interface for exchanging signals with said plurality of conference terminals and a processor operatively connected to said interface, the processor being configured to cause the system to carry out the constructing step of the method according to any of claims 1-9 using values obtained through said interface and to accept a selection of a terminal on which management tasks must be performed, wherein the system interfaces with an administrator's unit or a chairperson's unit having a graphical user interface allowing a user to make said selection.

## Patentansprüche

1. Verfahren zum Bestimmen einer räumlichen Topologie eines Netzwerks, das mehrere Konferenzterminals in einem Konferenzraum umfasst, und zur automatischen Erzeugung einer Synoptik in einem Konferenzsystem, wobei eine Synoptik eine Karte des Konferenzraums ist, auf der jedes einzelne Konferenzterminal mit einem bestimmten Sitz im Konferenzraum verknüpft ist,
wobei das Verfahren umfasst:
für jedes einzelne von den mehreren Konferenzterminals:
- Senden eines lokalisierbaren Signals;
- Gewinnen von Ortswerten für das sendende Konferenzterminal mittels einer Terminal-Lokalisierungsvorrichtung;
- Konstruieren der Topologie durch Hinzufügen des sendenden Konferenzterminals an einer aus den Ortswerten abgeleiteten Position,
wobei das Verfahren ferner das Anzeigen einer grafischen Darstellung der räumlichen Topologie als Karte auf einer grafischen Benutzeroberfläche umfasst, wobei die grafische Benutzeroberfläche Teil einer Einheit eines Administrators oder einer Einheit eines Vorsitzenden ist,
wobei ein Benutzer, der ein Systemadministrator oder ein(e) Vorsitzende(r) ist, die Darstellung zu Hilfe nimmt und einzelne Terminals, auf denen Verwaltungsaufgaben ausgeführt werden müssen, auf der Basis dieser visuellen Darstellung auswählt.

2. Verfahren nach Anspruch 1, wobei die Schritte des Sendens eines lokalisierbaren Signals und des Gewinnens von Ortswerten periodisch für jedes einzelne von den mehreren Konferenzterminals ausgeführt werden und wobei die angezeigte grafische Darstellung aktualisiert wird, wenn sich diese Werte geändert haben.

3. Verfahren nach Anspruch 1 oder Anspruch 2, wobei das lokalisierbare Signal ein optisches Signal ist und wobei die Terminal-Lokalisierungsvorrichtung mindestens eine Kamera zum Registrieren des optischen Signals umfasst.

4. Verfahren nach Anspruch 3, wobei das optische Signal ein Infrarotsignal ist.

5. Verfahren nach Anspruch 3 oder 4, wobei die Ortswerte zum Zuweisen einer Position in der räumlichen Topologie zu dem Konferenzterminal aus der Stellung der mindestens einen Kamera abgeleitet werden, insbesondere aus der Neigung und dem Winkel der Kamera.

6. Verfahren nach Anspruch 1 oder Anspruch 2, wobei das lokalisierbare Signal ein Audiosignal ist und wobei die Terminal-Lokalisierungsvorrichtung mindestens einen Audioempfänger zum Registrieren des Audiosignals umfasst.

7. Verfahren nach Anspruch 6, wobei das Audiosignal ein Ultraschallsignal ist.

8. Verfahren nach Anspruch 6 oder 7, wobei die Ortswerte zum Zuweisen einer Position in der räumlichen Topologie zu dem Konferenzterminal aus dem registrierten Audiosignal abgeleitet werden, insbesondere aus der Lautstärke des Audiosignals.

9. Verfahren nach einem der Ansprüche 1-8, wobei die Terminal-Lokalisierungsvorrichtung Teil der mehreren Konferenzterminals ist.

10. Computerprogrammprodukt, welches Codemittel umfasst, die dafür ausgelegt sind, einen Prozessor zu veranlassen, den Schritt des Konstruierens des Verfahrens nach einem der Ansprüche 1-9 auszuführen und sich mit einer Einheit eines Administrators oder einer Einheit eines (einer) Vorsitzenden zu verbinden, die eine grafische Benutzeroberfläche aufweist, die einem Benutzer ermöglicht, einzelne Terminals auszuwählen, auf denen Verwaltungsaufgaben ausgeführt werden müssen.

11. System zum Bestimmen einer räumlichen Topologie eines Netzwerks, das mehrere Konferenzterminals umfasst, wobei das System eine Schnittstelle zum Austauschen von Signalen mit den mehreren Konferenzterminals und einen Prozessor, der mit der Schnittstelle in Wirkverbindung steht, umfasst, wobei der Prozessor dafür ausgelegt ist, das System zu veranlassen, den Schritt des Konstruierens des Verfahrens nach einem der Ansprüche 1-9 unter Verwendung von Werten auszuführen, die über die Schnittstelle gewonnen wurden, und eine Auswahl eines Terminals anzunehmen, auf dem Verwaltungsaufgaben ausgeführt werden müssen, wobei sich das System mit einer Einheit eines Administrators oder einer Einheit eines (einer) Vorsitzenden verbindet, die eine grafische Benutzeroberfläche aufweist, die einem Benutzer ermöglicht, diese Auswahl vorzunehmen.

## Revendications

1. Procédé pour déterminer une topologie spatiale d'un réseau comprenant une pluralité de terminaux de conférence dans une salle de conférences et pour la création automatique d'un synoptique dans un système de téléconférence, dans lequel un synoptique est une carte de la salle de conférences dans laquelle chaque terminal de conférence simple est lié à un siège particulier dans la salle de conférences,
le procédé comprenant :
pour chaque terminal de conférence simple de ladite pluralité :
- l'émission d'un signal localisable ;
- l'obtention de valeurs de localisation pour ledit terminal de conférence émetteur au moyen d'un dispositif de localisation de terminal ;
- la construction de ladite topologie en ajoutant ledit terminal de conférence émetteur à une position obtenue à partir desdites valeurs de localisation
dans lequel le procédé comprend en outre l'affichage d'une représentation graphique de ladite topologie spatiale en tant que carte dans une interface utilisateur graphique, dans laquelle ladite interface utilisateur graphique fait partie de l'unité d'un administrateur ou de l'unité d'un président,
dans lequel un utilisateur, étant un administrateur ou un président du système, se réfère à ladite représentation et sélectionne des terminaux individuels sur lesquels des tâches de gestion doivent être effectuées sur la base de cette représentation visuelle.

2. Procédé selon la revendication 1, dans lequel les étapes d'émission d'un signal localisable et d'obtention de valeurs de localisation sont effectuées de façon périodique pour chaque terminal de conférence simple de ladite pluralité, et dans lequel ladite représentation graphique affichée est mise à jour quand lesdites valeurs ont changé.

3. Procédé selon la revendication 1 ou la revendication 2, dans lequel ledit signal localisable est un signal optique et dans lequel ledit dispositif de localisation de terminal comprend au moins un appareil de prise de vues pour enregistrer ledit signal optique.

4. Procédé selon la revendication 3, dans lequel ledit signal optique est un signal infrarouge.

5. Procédé selon la revendication 3 ou 4, dans lequel lesdites valeurs de localisation pour attribuer audit terminal de conférence une position dans ladite topologie spatiale, sont obtenues à partir de la posture de l'au moins un appareil de prise de vues, en particulier l'inclinaison et l'angle de l'appareil de prise de vues.

6. Procédé selon la revendication 1 ou la revendication 2, dans lequel ledit signal localisable est un signal audio et dans lequel ledit dispositif de localisation de terminal comprend au moins un récepteur audio pour enregistrer ledit signal audio.

7. Procédé selon la revendication 6, dans lequel ledit signal audio est un signal à ultrasons.

8. Procédé selon la revendication 6 ou 7, dans lequel lesdites valeurs de localisation pour attribuer audit terminal de conférence une position dans ladite topologie spatiale, sont obtenues à partir du signal audio enregistré, en particulier le volume du signal audio.

9. Procédé selon l'une quelconque des revendications 1 à 8, dans lequel ledit dispositif de localisation de terminal fait partie de ladite pluralité de terminaux de conférence.

10. Produit formant programme informatique comprenant un moyen formant code configuré pour amener un processeur à effectuer l'étape de construction du procédé selon l'une quelconque des revendications 1 à 9 et pour s'interfacer avec l'unité d'un administrateur ou l'unité d'un président ayant une interface utilisateur graphique permettant à un utilisateur de sélectionner des terminaux individuels sur lesquels des tâches de gestion doivent être effectuées.

11. Système pour déterminer une topologie spatiale d'un réseau comprenant une pluralité de terminaux de conférence, le système comprenant une interface pour échanger des signaux avec ladite pluralité de terminaux de conférence et un processeur relié de manière opérationnelle à ladite interface, le processeur étant configuré pour amener le système à effectuer l'étape de construction du procédé selon l'une quelconque des revendications 1 à 9 en utilisant des valeurs obtenues par l'intermédiaire de ladite interface et pour accepter une sélection d'un terminal sur lequel des tâches de gestion doivent être effectuées, dans lequel le système s'interface avec l'unité d'un administrateur ou l'unité d'un président ayant une interface utilisateur graphique permettant à un utilisateur de faire ladite sélection.
